# EUROPEAN PATENT APPLICATION

(11) **EP 4 712 677 A1**
(43) Date of publication of application: **18.03.2026**
(21) Application number: 24803350.8
(22) Date of filing: 19.04.2024
(51) Int. Cl.: H04W 76/18, H04W 48/02, H04W 84/00, H04W 92/20

(54) **BASE STATION DEVICE, COMMUNICATION DEVICE, CONTROL METHOD, AND PROGRAM**

(30) Priority: 10.05.2023 JP 2023078127
(71) Applicant: Canon Kabushiki Kaisha, Tokyo, 146-8501 (JP)
(72) Inventor: AOYAGI Mizuho, Tokyo 146-8501 (JP)
(74) Representative: Canon Europe Limited
(86) International application number: PCT/JP2024/015511
(87) International publication number: WO 2024/232236

(57) **Abstract**

A base station apparatus is disclosed, the base station apparatus relating to provision of a communication service, the base station apparatus includes an acquisition unit configured to acquire a connection request from an external apparatus to one Integrated Access and Backhaul (IAB) node, and a processing unit configured to perform, at least in a case where the one IAB node is a mobile IAB node and the external apparatus is another IAB node, processing for rejecting the connection request.

## Description

### Technical Field

The present disclosure relates to a base station apparatus, a communication apparatus, a control method, and a program.

### Background Art

In 3rd Generation Partnership Project (3GPP^{®}), standardization of Integrated Access and Backhaul (IAB) as a communication technique for backhaul is underway.

An IAB technique is a technique for using, as backhaul communication, millimeter wave wireless communication in a 28 Gigahertz (GHz) band and the like for use in access communication between a base station and user equipment (UE) (PTL 1).

In a backhaul communication network using the IAB technique (hereinafter, IAB network), a relay apparatus referred to as an IAB node relays communication from an IAB donor that corresponds to a conventional base station, to destination UE (base station relay). The IAB node has a function equivalent to that of a base station, which accepts connection from the UE.

In 3GPP, in next Release-18, formulation of a specification of a mobile IAB for realizing Vehicle-Mounted Relay is planned to meet demands for improvement of a 5th generation mobile communication system (5G) cellular coverage and connectivity. Vehicle-Mounted Relay relates to a technique in which an IAB node mounted on a vehicle performs base station relay.

In discussion on the formulation of the specification, it is considered that requirements unique to mobility scenarios, in which both the IAB node and the UE move, may arise, which cannot be satisfied by conventional specifications.

### Citation List

### Patent Literature

PTL 1: Japanese Unexamined Patent Application Publication No. 2019-534625

### Summary of Invention

### Technical Problem

For example, in a case where the mobile IAB accepts a multi-hop configuration, an IAB node may be connected under the mobile IAB node in a state where an IAB network including the mobile IAB node is formed. In such a case, if an upper-level mobile IAB node moves together with the vehicle, it may become difficult to maintain the IAB network. As a result, the communication service for the IAB node and the UE under the control may become unavailable. Further, depending on the configuration of the IAB network, there may be a case where connecting the IAB node to the mobile IAB node is undesirable. In this respect, even in the current specifications, there is no proposed mechanism to restrict multi-hop configurations in an IAB network environment that may include a mobile IAB node.

The present invention is made in consideration of at least one of the above-described issues. As one aspect of the present invention, the present invention is directed to a mechanism for restricting a multi-hop configuration in an IAB network environment that may include a mobile IAB.

### Solution to Problem

According to an aspect of the present disclosure, a base station apparatus relating to provision of a communication service, the base station apparatus includes an acquisition unit configured to acquire a connection request from an external apparatus to one Integrated Access and Backhaul (IAB) node, and a processing unit configured to perform, at least in a case where the one IAB node is a mobile IAB node and the external apparatus is another IAB node, processing for rejecting the connection request.

### Advantageous Effects of Invention

According to one aspect of the present invention, it is possible to provide the mechanism for restricting the multi-hop configuration in the IAB network environment that may include the mobile IAB.

### Brief Description of Drawings

[Fig. 1A] Fig. 1A is a diagram illustrating an example of a mobile communication system according to embodiments.
[Fig. 1B] Fig. 1B is a diagram illustrating another situation of the mobile communication system illustrated in Fig. 1A.
[Fig. 2] Fig. 2 is a block diagram of hardware functions of a mobile Integrated Access and Backhaul (IAB) node according to the embodiments.
[Fig. 3A] Fig. 3A is a block diagram of software functions of the mobile IAB node according to the embodiments.
[Fig. 3B] Fig. 3B is a block diagram of software functions of an IAB donor according to the embodiments.
[Fig. 4] Fig. 4 is sequence diagram of connection control processing of the mobile IAB node and an IAB node according to a first embodiment.
[Fig. 5] Fig. 5 illustrates a processing procedure of the IAB doner to a connection request from an external apparatus according to the first embodiment.
[Fig. 6A] Fig. 6A is a sequence diagram of connection control processing of the mobile IAB node and an IAB node according to a second embodiment.
[Fig. 6B] Fig. 6B illustrates a processing procedure of the IAB donor to a connection request from an external apparatus according to the second embodiment.
[Fig. 7A] Fig. 7A illustrates a procedure of connection control processing of the mobile IAB node and an IAB node according to a third embodiment.
[Fig. 7B] Fig. 7B illustrates a processing procedure of the IAB donor to a connection request from an external apparatus according to the third embodiment.

### Description of Embodiments

Hereinafter, each embodiment will be described in detail with reference to the accompanying drawings.

### [First Embodiment]

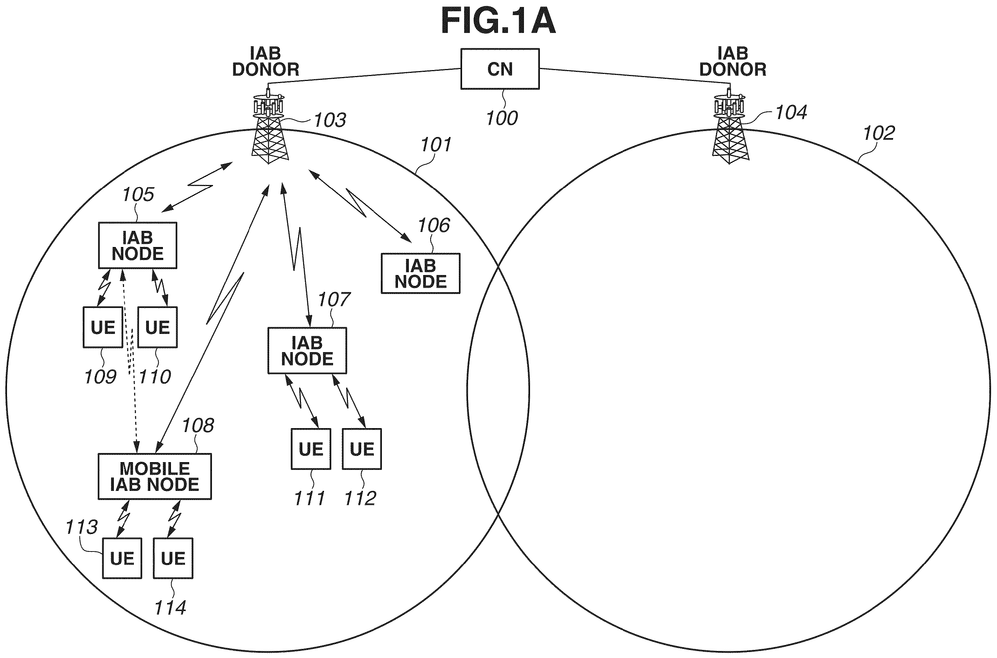

Fig. 1A is a diagram illustrating an example of a mobile communication system according to a first embodiment.

In the example illustrated in Fig. 1A, in a network that provides a public network communication service to cell coverages 101 and 102, Integrated Access and Backhaul (IAB) donors 103 and 104 each providing a connection to a core network (CN) 100 are present.

In the cell coverage 101, IAB nodes 105 to 107 and a mobile IAB node 108 are wirelessly connected to the IAB donor 103, and form an IAB network. In Fig. 1A, CN is an abbreviation for core network, and performs various processing, such as authentication of user equipment (UE) 109 to 114, which are terminal devices.

The IAB donor 103 comprehensively controls each of the IAB nodes 105 to 107 and the mobile IAB node 108, and forms the cell coverage 101 covered by its own station. Likewise, the IAB donor 104 forms the cell coverage 102 covered by its own station.

In the IAB network, a communication packet conforming to a format of Backhaul Adaptation Protocol (BAP) data protocol data unit (PDU) (hereinafter, BAP data packet) is used as a communication packet. PDU is an abbreviation for protocol data unit.

For example, an internet protocol (IP) packet from the CN 100 to the UE 109 is encapsulated into a BAP data packet in the IAB donor 103, and the BAP data packet is transferred to the IAB node 105. The transferred BAP data packet is converted back into an IP packet again in the IAB node 105, and the IP packet is delivered to the destination UE 109.

Likewise, the IP packet from the UE 109 is also encapsulated into a BAP data packet in the IAB node 105. Further, the BAP data packet is returned to the IP packet again in the IAB donor 103, and the IP packet is transferred to the CN 100. IP is an abbreviation for internet protocol.

The IAB nodes 105 to 107 are fixed communication nodes, and are connected to the IAB donor 103.

The mobile IAB node 108 is also connected to the IAB donor 103. In this case, the IAB donor 103, the IAB nodes 105 to 107, and the mobile IAB node 108 form the IAB network.

The mobile IAB node 108 may be a communication node installed in a mobile object, such as a train, a bus, and a taxi. The mobile object is not limited to an object moving on a road, and indicates a concept including an aerial object. In a case where the mobile IAB node 108 moves to the cell coverage 102 beyond the cell coverage 101, switching connection is performed to place the mobile IAB node 108 under the control of the IAB donor 104. Switching between the base stations is performed via the CN 100.

The UEs 109 to 112 are connected to the IAB node 105 or 107. Each piece of the UE 113 and 114 is connected to the mobile IAB node 108. The mobile object equipped with the mobile IAB node 108 may move (travel) within the cell coverage 101 and the cell coverage 102 based on a predetermined route.

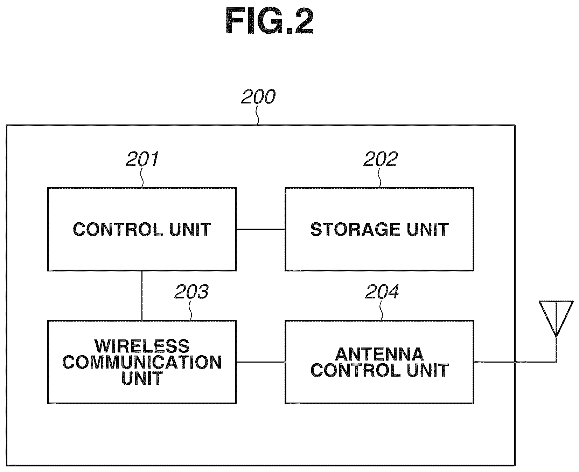

Fig. 2 is a block diagram of hardware functions of the mobile IAB node 108 according to the present embodiment.

The mobile IAB node 108 includes a control unit 201, a storage unit 202, a wireless communication unit 203, and an antenna control unit 204.

The control unit 201 includes one or more processors, such as a central processing unit (CPU) and a microprocessor unit (MPU), and controls the entire operation of the communication apparatus by executing control programs read into a random access memory (RAM) serving as the storage unit 202. Processing performed by the control unit 201 described in a flowchart described below can also be realized using a hardware circuit, such as an application specific integrated circuit (ASIC) and a field programmable gate array (FPGA). ASIC is an abbreviation for application specific integrated circuit. FPGA is an abbreviation for field programmable gate array. The processing described in the flowchart below can also be realized by cooperation of the hardware circuit and the processors, such as the CPU and the MPU.

The storage unit 202 stores information that is used in control by the control unit 201, and information relating to communication. For example, the storage unit 202 stores control programs to be executed by the control unit 201, information on a UE to be connected, and various kinds of information such as connection intensity with the IAB donor 103.

The storage unit 202 may include a main storage unit and an auxiliary storage unit. Examples of the main storage unit include a read only memory (ROM) and a random access memory (RAM). The main storage unit may store or temporarily store programs and data, such as an operating system (OS) that is basic software executed by the control unit 201, and application software. Examples of the auxiliary storage unit include a hard disk drive (HDD) and a solid state drive (SSD), and the auxiliary storage unit may store data relating to application software. For example, the control programs stored in a nonvolatile storage area are loaded into a random access memory (RAM), and executed by the processors of the control unit 201. As described above, the control unit 201 and the storage unit 202 may function as a so-called computer.

The storage unit 202 may include a recording medium storing a predetermined program. The program stored in the recording medium may be installed through a drive device or the like, and the installed predetermined program may be executed by the control unit 201. As the recording medium, various types of recording media can be used. For example, the recording medium may be a recording medium that records information optically, electrically, or magnetically, such as a compact disc (CD)-ROM, a flexible disk, and a magnetooptical disk. Further, the recording medium may be a semiconductor memory or the like electrically recording information, such as a ROM and a flash memory. Note that carrier waves are not considered as a recording media.

The wireless communication unit 203 performs cellular network communication, such as long term evolution (LTE) and 5th generation mobile communication system (5G) complying with a 3rd Generation Partnership Project (3GPP^{®}) standard.

The antenna control unit 204 controls an antenna for use in wireless communication that is performed by the wireless communication unit 203.

While the hardware has been described with reference to the mobile IAB node 108, each of the IAB nodes 105 to 107 also has a similar configuration. Further, each of the IAB donors 103 and 104 also has a similar configuration.

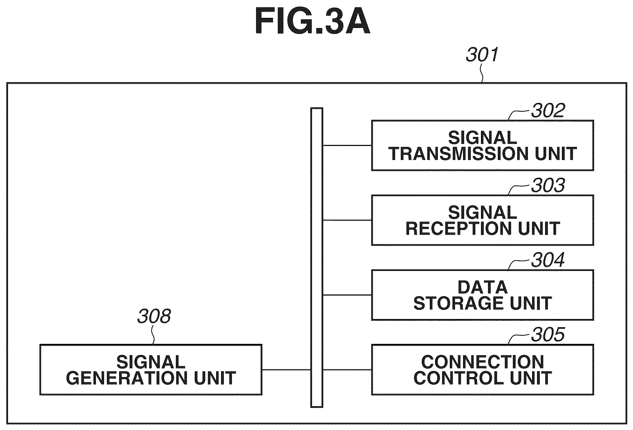

Fig. 3A is a block diagram of software functions of the mobile IAB node 108 according to the present embodiment.

A software functional block 301 is stored in the storage unit 202 and executed by the control unit 201. The software functional block 301 includes a signal transmission unit 302, a signal reception unit 303, a data storage unit 304, a connection control unit 305, and a signal generation unit 308.

The signal transmission unit 302 and the signal reception unit 303 each control the wireless communication unit 203 via the control unit 201, and performs the cellular network communication, such as LTE and 5G complying with the 3GPP standard, with the IAB donor 103 and the UE 113 and 114.

The data storage unit 304 performs control and management of the storage unit 202, and stores the software itself, connection information with the IAB donors 103 and 104, information relating to the UE 113 and 114, and the like. Information between the IAB nodes can be collected using a notification signal and a communication packet accompanying various kinds of control PDUs of the BAP (hereinafter, BAP control packet).

The connection control unit 305 controls the antenna control unit 204 via the control unit 201 during wireless communication.

The signal generation unit 308 manages and issues various kinds of signals generated by the connection control unit 305.

While the hardware has been described with reference to the mobile IAB node 108, each of the IAB nodes 105 to 107 also has a similar configuration.

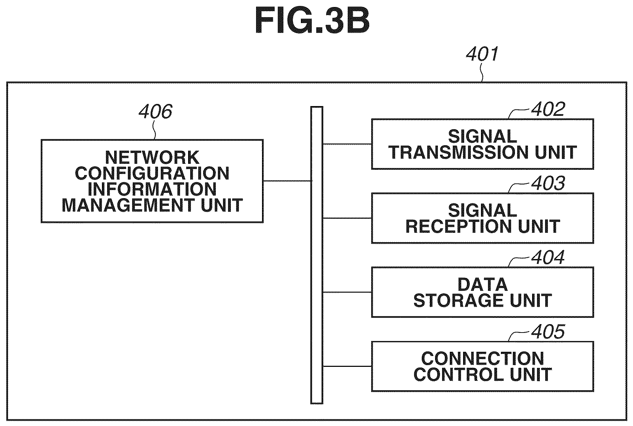

Fig. 3B is a block diagram of software functions of the IAB donor 103 according to the present embodiment. In the following description, the term "corresponding IAB network" means an IAB network formed by the IAB donor 103.

A software functional block 401 is stored in the storage unit 202 and executed by the control unit 201. The software functional block 401 includes a signal transmission unit 402, a signal reception unit 403, a data storage unit 404, a connection control unit 405, and a network configuration information management unit 406.

The signal transmission unit 402 and the signal reception unit 403 each control the wireless communication unit 203 via the control unit 201. The signal transmission unit 402 performs processing for transmitting signals and messages generated by the connection control unit 405, and the signal reception unit 403 performs processing for receiving messages from the UE under control.

The data storage unit 404 performs control and management of the storage unit 202, and stores software itself, connection information with the IAB nodes 105 to 108, information relating to the UE 113 and 114, and the like. Various kinds of information can be collected using a notification signal, a radio resource control (RRC) message, a BAP data packet, and the like. RRC is an abbreviation for radio resource control, and BAP is an abbreviation for Backhaul Adaptation Protocol.

The connection control unit 405 controls the antenna control unit 204 via the control unit 201 during wireless communication. The connection control unit 405 performs connection control in the corresponding IAB network, based on information managed by the network configuration information management unit 406. More specifically, the connection control unit 405 controls connection among the IAB nodes 105 to 107, the mobile IAB node 108, and the UE 113 and 114 in the corresponding IAB network, based on IAB network configuration information and the like.

The network configuration information management unit 406 manages configuration information on the corresponding IAB network. The network configuration information management unit 406 may also manage type information on the UE, the IAB nodes, and the mobile IAB node each issuing a connection request, as a part of the IAB network configuration information.

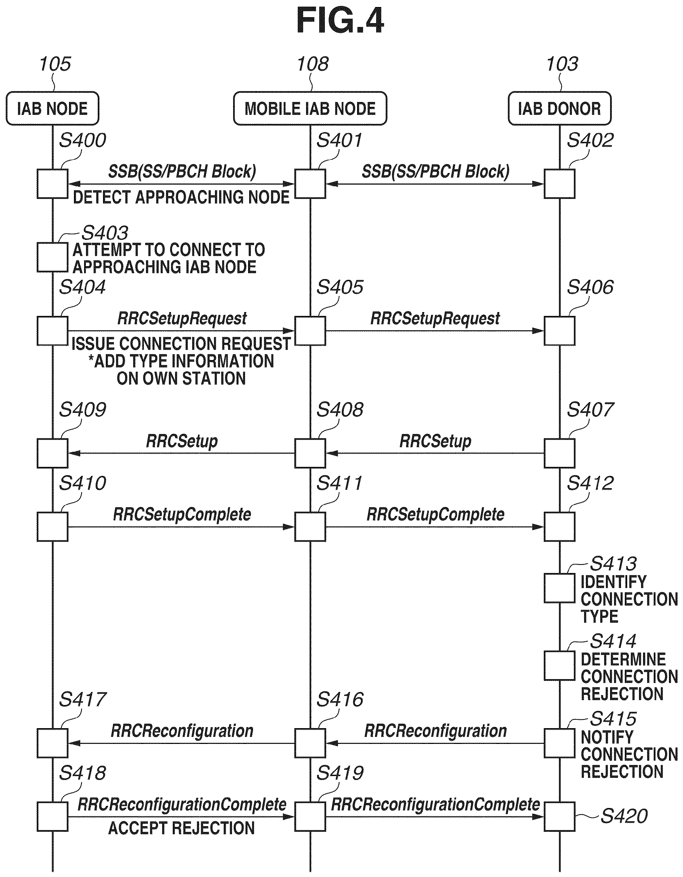

Fig. 4 is a sequence diagram of connection control processing of the IAB node 105 and the mobile IAB node 108 according to the first embodiment.

In the present embodiment, a case where the IAB node 105 performs a connection change request to the mobile IAB node 108 that has approached due to movement is described. Processing in which the IAB donor 103 acquires identification information on the IAB node 105 attempting a connection request to the mobile IAB node 108, and controls connection is described.

In step S400, the IAB node 105 performs transmission and reception of a notification signal. The IAB node 105 can detect presence of the mobile IAB node 108 approaching its own station, from the notification information received in step S400. As the notification signal, for example, SS/PBCH Block (SSB) may be used. The same applies to notification signals in steps S401, S402, and others described below.

In step S401, the mobile IAB node 108 performs transmission and reception of a notification signal.

In step S402, the IAB donor 103 transmits and receives a notification signal.

In step S403, in response to detection of presence of the mobile IAB node 108 approaching its own station, the IAB node 105 attempts to connect to the mobile IAB node 108.

In step S404, the IAB node 105 generates a connection request (RRCSetupRequest) for the mobile IAB node 108. The RRCSetupRequest is a message for requesting establishment of RRC connection. In a case where the IAB node 105 is a mobile IAB node, the IAB node 105 adds identification information indicating that its own station is a mobile IAB node, to RRCSetupRequest. As the identification information addition field, spare of RRCSetupRequest-IEs, randamValue in ue-identity, or spare 1 to 6 in establishmentCause may be utilized. For example, any of spare 1 to 6 is newly defined as a field of iab-TypeIndication. Further, the identification information is configured, in a case where "1" is set to the iab-TypeIndication field, to indicate that its own apparatus is a mobile node, namely, a mobile IAB node. Alternatively, the identification information may be configured, in a case where "0" is set, to indicate that its own apparatus is a non-mobile IAB node, namely, a fixed IAB node. As described above, it is possible to notify another apparatus of information for identifying whether its own apparatus is a mobile IAB node, by using the iab-TypeIndication field.

In steps S405 and S406, the mobile IAB node 108 includes the RRCSetupRequest received from the IAB node 105 in an INITIAL UL RRC MESSAGE TRASFER MESSAGE and transmits it to the IAB donor 103.

In step S406, in response to receipt of UL RRC MESSAGE TRASFER MESSAGE, the IAB donor 103 extracts RRCSetupRequest.

In steps S407 to S409, the IAB donor 103 continues processing relating to RRCSetup between the IAB node 105 and the mobile IAB node 108. The IAB donor 103 includes the RRCSetup message in a DL RRC MESSAGE TRASFER MESSAGE and transmits it to the mobile IAB node 108. The mobile IAB node 108 extracts RRCSetup from DL RRC MESSAGE TRASFER MESSAGE and transmits RRCSetup to the IAB node 105.

In step S410, the IAB node 105 transmits RRCSetupComplete as a second connection request to the mobile IAB node 108. In this processing, the IAB node 105 includes iab-Nodeindication in the RRCSetupComplete. In step S411, the mobile IAB node 108 transmits a UL RRC MESSAGE TRASFER MESSAGE including the RRCSetupComplete to the IAB donor 103.

In step S412, in response to receipt of UL RRC MESSAGE TRASFER MESSAGE, the IAB donor 103 extracts RRCSetupComplete. Further, the IAB donor 103 stores type information on the IAB node 105 based on iab-Nodeindication included in the extracted RRCSetupComplete. In other words, the IAB donor 103 acquires the identification information indicating whether the IAB node 105 is an IAB node, from the second connection request, and stores the type information.

In step S413, the IAB donor 103 identifies (determines) that the connection request has been issued from the IAB node, based on the type information acquired in step S412. Further, the IAB donor 103 identifies (determines) the request destination, based on the fact that RRCSetupComplete has been included in UL RRC MESSAGE TRASFER MESSAGE from the mobile IAB node 108. In other words, the IAB donor 103 identifies (determines) that the mobile IAB node 108 is the request destination (connection destination) of the connection request. As a result, in step S414, the IAB donor 103 determines to reject the connection request from the IAB node 105. In a modification, processing in steps S407 to S412 may be omitted. In this case, in step S413, the IAB donor 103 may identify that the connection request has been issued from the IAB node, based on the type information acquired in step S406.

In steps S415 to S417, the IAB donor 103 notifies the IAB node 105 of connection rejection via the mobile IAB node 108 using RRCReconfiguration. Alternatively, RRCConnectionRelease may be used to reject.

In steps S418 and S419, the IAB node 105 notifies the mobile IAB node 108 of acknowledgement of the rejection using RRCReconfigurationComplete.

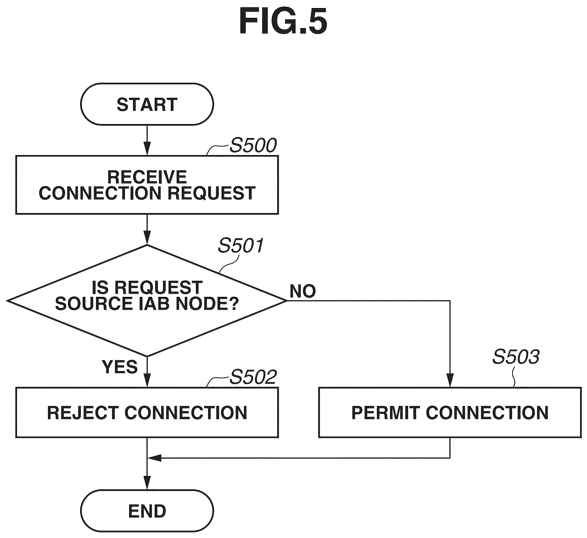

Fig. 5 illustrates a processing procedure of the IAB donor 103 to a connection request from an external apparatus according to the first embodiment. The external apparatus indicates an apparatus not forming the corresponding IAB network.

In step S500, the IAB donor 103 acquires type information on the external apparatus issuing the connection request. As described above with reference to Fig. 4, the type information can be acquired in steps S410 to S412, and can be verified in step S413.

In step S501, the IAB donor 103 determines whether the external apparatus issuing the connection request is an IAB node, based on the type information acquired in step S500. When RRCSetupComplete described above includes iab-Nodeindication, the IAB donor 103 may determine that the external apparatus is an IAB node. In contrast, when RRCSetupComplete described above does not include iab-Nodeindication, the IAB donor 103 may determine that the external apparatus is a UE.

Further, in step S501, the IAB donor 103 determines whether a connection destination of the connection request is a mobile IAB (mobile IAB node 108 in this example). The determination method may be as described above. More specifically, in a case where iab-TypeIndication included in the second connection request is a value (e.g., "1") indicating a mobile IAB node, the IAB donor 103 determines that the connection destination of the connection request is a mobile IAB node.

In a case where the external apparatus issuing the connection request is the IAB node 105 and the connection destination of the connection request is a mobile IAB (mobile IAB node 108 in this example) (YES in step S501), the processing proceeds to step S502. In step S502, the IAB donor 103 identifies that the external apparatus is an IAB node, and rejects connection. In this case, as described above with reference to Fig. 4, the IAB donor 103 notifies the IAB node 105 that connection is rejected, by using RRCReconfiguration.

In step S503, the IAB donor 103 identifies that the external apparatus issuing the connection request is not an IAB node, and permits connection. For example, in a case where the external apparatus issuing the connection request is a UE, the IAB donor 103 does not transmit RRCReconfiguration, and the processing ends.

In the upcoming Release-18, discussions have been conducted on the premise that each mobile IAB node adopts a single-hop configuration, in which only UEs connecting directly to its own station are allowed. As with the conventional IAB technique, a multi-hop configuration, in which an IAB node and a mobile IAB node are further arranged as apparatuses under the mobile IAB node, and the communication is relayed, is not denied. However, it is considered that adopting the multi-hop configuration increases complexity of network maintenance.

As a comparative example different from the present embodiment, if the connection request to the mobile IAB node 108 from the IAB node 105 is permitted, the following issue may occur. In a state where the IAB network including the mobile IAB node 108 is formed, the IAB node 105 is connected to the mobile IAB node 108. If the mobile IAB node 108 as an upper-level node moves in this state, it may become difficult to maintain the IAB network. As a result, the communication service for the IAB node 105 and the UEs 109 and 109 under control cannot be continued.

In contrast, the present embodiment can reduce such an issue that may occur in the comparative example. In other words, by rejecting the connection request to the mobile IAB node 108 from the IAB node 105, such inconvenience that may occur in the comparative example can be reduced.

As described above, according to the present embodiment, it is possible to establish the mechanism that appropriately limits the multi-hop configuration in the IAB network environment including the mobile IAB node 108.

### [Second Embodiment]

The following is a description of processing in a case where, in a state where the IAB network is formed by the IAB donor 103 and the IAB nodes 105 to 107 in Fig. 1A, the mobile IAB node 108 attempts to participate in the IAB network and attempts to establish connection with the IAB node 105 is described.

The assumptions of the present embodiment are as follows. The IAB network is operated under a load condition close to an acceptable load upper limit, and it is defined that the IAB network as a whole rejects the connection of the mobile IAB node 108.

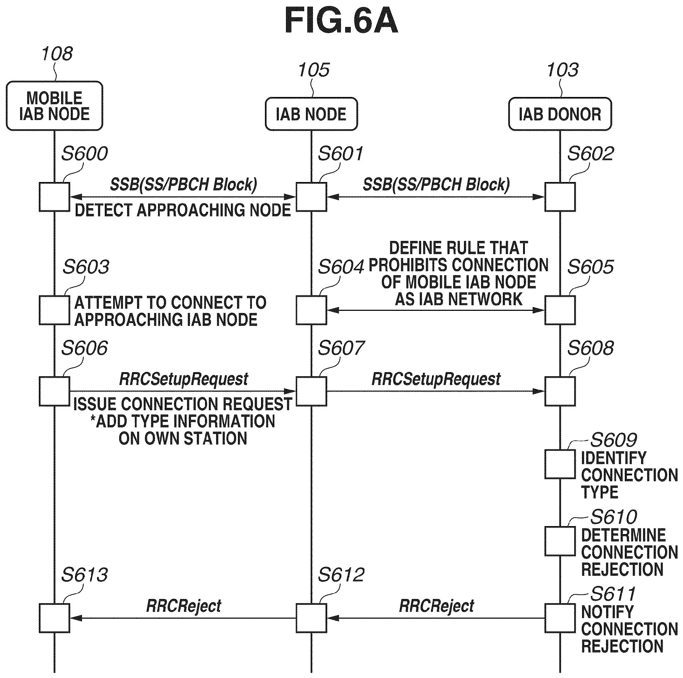

Fig. 6A is a sequence diagram of connection control processing of the IAB node 105 and the mobile IAB node 108 according to the second embodiment.

In steps S600 to S602, each of the IAB donor 103, the IAB node 105, and the mobile IAB node 108 transmits and receives a notification signal as in the first embodiment.

In step S600, the mobile IAB node 108 recognizes presence of the IAB node 105 as an approaching node from the notification signal.

In step S603, the mobile IAB node 108 attempts to connect to the IAB node 105.

In steps S604 and S605, the IAB donor 103 and the IAB node 105 forming the IAB network share a rule (a specific configuration setting) that prohibits the connection of a mobile IAB node. In a modification, steps S604 and S605 may be omitted.

In step S606, the mobile IAB node 108 issues a connection request to the IAB node 105. In this processing, the mobile IAB node 108 adds its own identification information to RRCSetupRequest that is transmitted as a connection request signal. The information added in this processing is information defined in the first embodiment.

More specifically, in steps S606 and S607, the mobile IAB node 108 transmits RRCSetupRequest to the IAB node 105. Then, the IAB node 105 transmits INITIAL UL RRC MESSAGE TRASFER MESSAGE including RRCSetupRequest to the IAB donor 103.

In step S608, in response to receipt of the UL RRC MESSAGE TRASFER MESSAGE, the IAB donor 103 extracts the RRCSetupRequest. Further, the IAB donor 103 stores connection type identification information based on identification information in an additional field of the extracted RRCSetupRequest.

In step S609, the IAB donor 103 identifies that the connection request has been issued from the IAB node, based on the identification information acquired in step S608. In other words, in step S609, the IAB donor 103 identifies that an external apparatus issuing the connection request is a mobile IAB node (mobile IAB node 108), based on the type information acquired in step S608. As a result, in step S610, the IAB donor 103 determines to reject the connection request to the IAB node 105 from the mobile IAB node 108. In steps S611, S612, and S613, the IAB donor 103 rejects connection to the mobile IAB node 108 by using RRCReject.

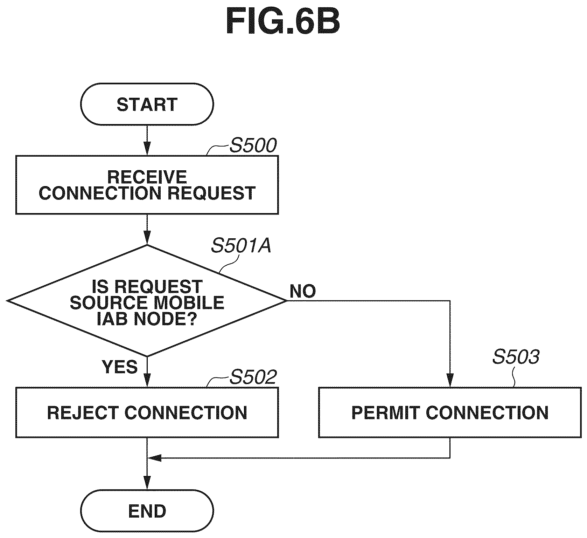

Fig. 6B illustrates a processing procedure of the IAB donor 103 to a connection request from an external apparatus according to the second embodiment.

The processing illustrated in Fig. 6B is different from the processing illustrated in Fig. 5 in the first embodiment in that step S501 is replaced with step S501A.

In step S501A, the IAB donor 103 determines whether the external apparatus issuing the connection request is the mobile IAB node 108, based on the identification information acquired in step S500. In a case where the external apparatus issuing the connection request is the mobile IAB node 108 (YES in step S501A), in step S502, the IAB donor 103 identifies that the external apparatus is the mobile IAB node 108, and rejects connection. In contrast, in a case where the external apparatus issuing the connection request is an IAB node (fixed communication node) (NO in step S501A), in step S503, the IAB donor 103 permits the current connection request.

As a comparative example different from the present embodiment, in a case where the connection request to the IAB node 105 from the mobile IAB node 108 is permitted, the following disadvantageous situation may occur. Specifically, the mobile IAB node 108 may be connected after the IAB network including the IAB node 105 has been formed. If the mobile IAB node 108 moves in such a condition, it may become difficult to maintain the IAB network.

In contrast, the present embodiment can reduce such disadvantage that may occur in the comparative example. In other words, by rejecting the connection request to the IAB node from the mobile IAB node 108, such disadvantage that may occur in the comparative example can be reduced.

As described above, according to the second embodiment, a mechanism that appropriately limits the multi-hop configuration in the IAB network environment including the mobile IAB node 108, as with the above-described first embodiment, can be implemented. Further, according to the second embodiment, the multi-hop configuration can be appropriately limited based on the predefined rule (more specifically, rule that prohibits connection of mobile IAB node 108 as IAB network). In the second embodiment, the case where the RRC SetupRequest as an example of the connection request includes iab-TypeIndication, and RRC SetupComplete as an example of the connection request includes iab-NodeIndication is described. However, this is not limiting, and RRC SetupRequest may include both iab-TypeIndication and iab-NodeIndication. Further, RRC SetupComplete may include both iab-TypeIndication and iab-NodeIndication. In a case where the former is adopted, connection validity can be determined at an early stage of the connection, enabling reduction of computational cost. In a case where the latter is adopted, connection propriety can be determined without largely modifying the existing communication standard. In other words, only by adding iab-TypeIndication to the RRC SetupComplete message that is already defined to include the iab-NodeIndication format, information for connection propriety can be transmitted.

The second embodiment can be effectively combined with the above-described first embodiment. In this case, in a case where a request source of the connection request is the mobile IAB node 108 and the request destination of the connection request is the mobile IAB node 108, the connection request may be rejected. In the present embodiment, the case where the IAB donor 103 rejects the connection request is described as an example, but rejection determination may be performed by a lower-level node. In this case, the IAB node 105 that previously shares the rule that prohibits connection of the mobile IAB node checks contents of the connection request (RRC SetupRequest) received from the IAB node 108. Subsequently, in a case where iab-TypeIndication included in the connection request is a value (e.g., "1") indicating the mobile IAB node, the IAB node 105 determines to reject the connection request. In a case where the IAB node 105 determines to reject the connection request, the IAB node 105 transmits an RRC reject message that is a response message to the mobile IAB node 108, to reject the connection request. In contrast, in a case where iab-TypeIndication included in the connection request is not a value (e.g., "1") indicating the mobile IAB node, the IAB node 105 transfers the connection request to the IAB donor 105 that is a higher-level IAB node. As the subsequent connection processing, the connection processing described in the above-described embodiment may be performed. According to the modification of the second embodiment, in the IAB node on the downstream, it is possible to appropriately limit the multi-hop configuration based on the previously shared rule (more specifically, rule that prohibits connection of mobile IAB node 108 as IAB network).

### [Third Embodiment]

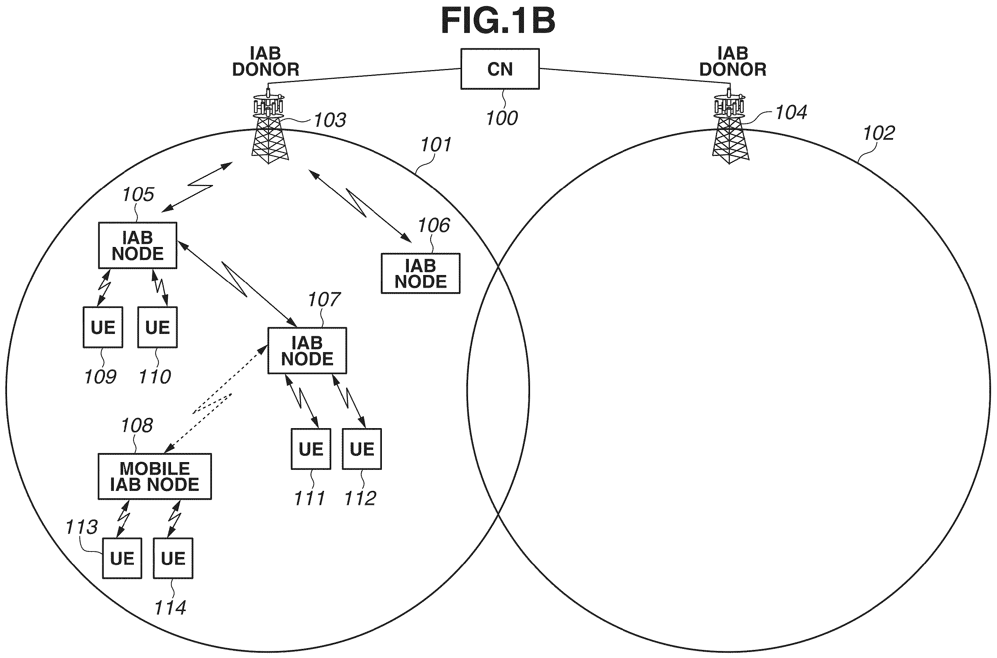

Processing in a case where, in a state where the IAB network is formed by the IAB donor 103 and the IAB nodes 105 to 107 in Fig. 1B, the mobile IAB node 108 attempts to participate in the IAB network and attempts to establish connection with the IAB node 107 is described.

In the IAB network formed in the present embodiment, the number of hops in the IAB node configuration is defined. "N" of the number of hops N in the configuration is a natural number of 2 or more, and it signifies that connections from the mobile IAB node 108 to the IAB node at hop count of N or more are not permitted.

In the third embodiment, the number of hops N in the IAB node configuration is 2 (example of threshold).

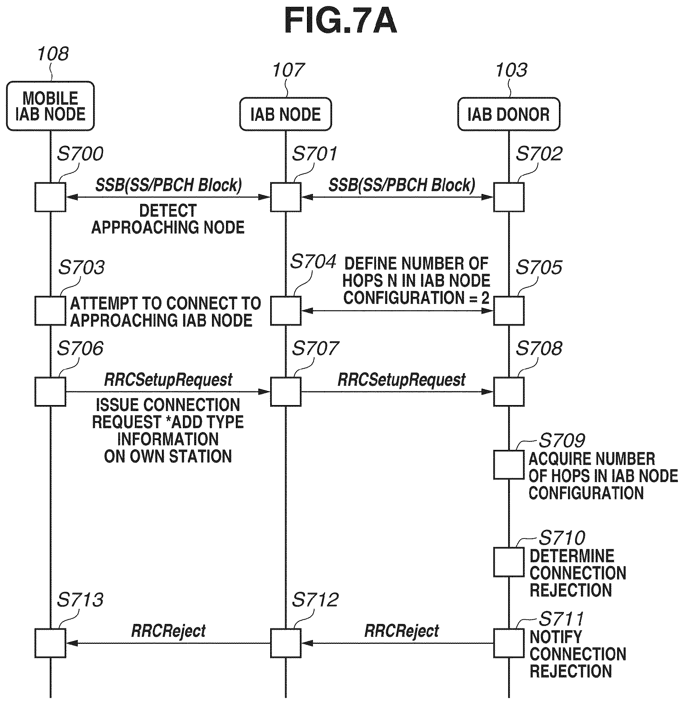

Fig. 7A is a sequence diagram of connection control processing of the mobile IAB node 108 and the IAB node 107 according to the third embodiment.

In steps S700 to S703, each of the IAB donor 103, the IAB node 107, and the mobile IAB node 108 performs transmission and reception of a notification signal as in the first embodiment.

In step S704, the IAB node 107 notifies the IAB donor 103 of the number of hops in the IAB node configuration in its own IAB network.

In this processing, as a method for acquiring its own hop count, Phase 2-2: Routing update of IAB-node Integration Procedure defined in TS 38.401 8.12 can be used. In other words, when an IP address is acquired in Phase 2-2: Routing update, for example, Traceroute is executed to acquire the number of hops in its own IAB network.

The information can be notified to the IAB donor 103 through BAP.

In step S705, as the IAB network, the number of hops N in the IAB node configuration is defined as 2, and the definition is notified to the IAB nodes 105 to 107 forming the IAB network.

Thereafter, in steps S706 and S707, the mobile IAB node 108 transmits RRCSetupRequest to the IAB node 107, and then, the IAB node 107 transmits INITIAL UL RRC MESSAGE TRASFER MESSAGE including RRCSetupRequest to the IAB donor 103.

In step S708, in response to receipt of the UL RRC MESSAGE TRASFER MESSAGE, the IAB donor 103 extracts the RRCSetupRequest.

In step S709, the IAB donor 103 acquires the number of hops of the IAB node 107 and determines to reject connection based on the identification information on the mobile IAB node 108 issuing the connection request. For example, in a case where the IAB donor 103 receives INITIAL UL RRC MESSAGE TRASFER MESSAGE including RRCSetupRequest from the IAB node 107, the IAB donor 103 may perform determination as follows. First, the IAB donor 103 may determine that the number of hops of the IAB node having transmitted RRCSetupRequest is the number of hops of the IAB node 107 + 1 (i.e., 2 in example illustrated in Fig. 7A). In a case where the current number of hops is the number of hops N in the configuration, the IAB donor 103 determines to reject the connection request to the IAB node 107 from the mobile IAB node 108. As a result, in step S710, the IAB donor 103 determines to reject the connection request to the IAB node 107 from the mobile IAB node 108. In steps S711, S712, and S713, the IAB donor 103 rejects connection of the mobile IAB node 108 by using RRCReject. In a case where the external apparatus issuing the connection request is not the mobile IAB node 108 but a UE, the IAB donor 103 may accept the connection request.

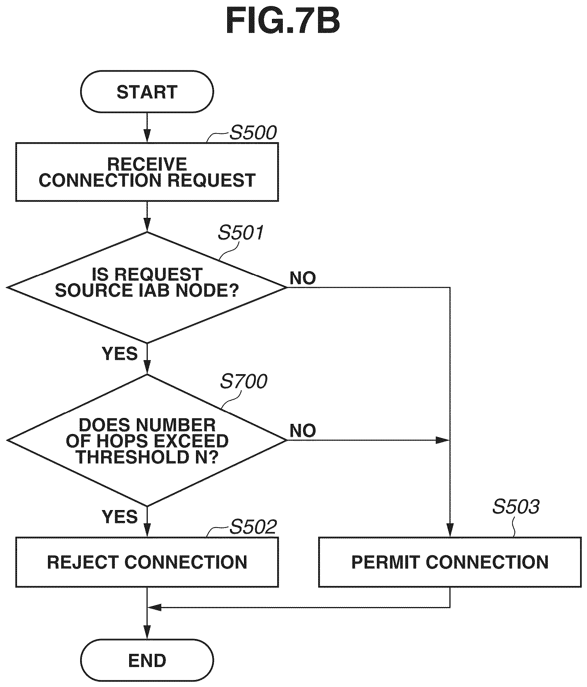

Fig. 7B illustrates a processing procedure of the IAB donor 103 to a connection request from an external apparatus according to the third embodiment.

The processing illustrated in Fig. 7B is different from the processing illustrated in Fig. 5 in the first embodiment in that, in a case where a determination result in step S501 is "YES", the processing proceeds to step S700 in place of step S502.

In step S700, the IAB donor 103 determines whether the current number of hops is equal to the number of hops N in the configuration. In a case where the current number of hops is equal to the number of hops N in the configuration (YES in step S700), the IAB donor 103 rejects the current connection request in step S502. In contrast, in a case where the current number of hops is less than the number of hops N in the configuration (NO in step S700), the IAB donor 103 permits the current connection request in step S503.

In Fig. 7B, the determination processing in step S501 is the same as the processing illustrated in Fig. 5 in the first embodiment, but may be different from the processing illustrated in Fig. 5 in the first embodiment. For example, in Fig. 7B, as processing in place of the processing in step S501, the IAB donor 103 may determine whether the external apparatus issuing the connection request is an IAB node, based on the type information acquired in step S500. In other words, in Fig. 7B, it is not necessary to determine whether the connection destination of the connection request is the mobile IAB node 108.

As a comparative example different from the present embodiment, in a case where the connection request is permitted based on a condition in which the number of hops is not considered, the following disadvantageous situation may occur. The IAB network in which the number of hops is excessively large may be formed, and in such a state, complexity of network maintenance may be increased, and it may become difficult to maintain the stable IAB network.

In contrast, the present embodiment can reduce such an issue that may occur in the comparative example. In other words, by rejecting the connection request in which the number of hops exceeds the number of hops N in the configuration, such inconvenience that may occur in the comparative example can be reduced.

As described above, according to the third embodiment, it is possible to implement the mechanism that appropriately limits the multi-hop configuration in the IAB network environment including the mobile IAB node 108, as with the above-described first embodiment. Further, according to the third embodiment, it is possible to appropriately limit the multi-hop configuration based on the predefined rule (more specifically, rule that prohibits connection of IAB nodes with a hop count exceeding the number of hops N in the configuration).

The third embodiment can be effectively combined with the above-described second embodiment. For example, in a case where the third embodiment and the second embodiment are effectively combined, in a case where the request source of the connection request is the mobile IAB node 108 and the current number of hops is equal to the number of hops N in the configuration, the connection request may be rejected.

### [Other Embodiments]

As described in the above-described embodiments, transmission and reception of identification information is based on identification processing in which the identification signal is added within the RRC process. In other words, the identification processing is described as the processing method equivalent to Phasel: IAB-MT setup in connection sequence IAB-node Integration Procedure of the IAB node by the 3GPP standard defined in TS 38.401 8.12. However, the identification processing may be performed during Phase, for example, Phase 2-1: BH RLC channel establishment, Phase 2-2: Routing update, or Phase 3: IAB-DU setup.

Further, the above-described embodiments relate to a public network communication service, but may be applied to local 5G or the like.

The present invention is not limited to the above-described embodiments, and various modifications and alterations can be made without departing from the spirit and scope of the invention. Accordingly, the following claims are appended in order to publicly disclose the scope of the invention.

This application claims the benefit of Japanese Patent Application No. 2023-078127, filed May 10, 2023, which is hereby incorporated by reference herein in its entirety.

### Description of Reference Numerals

- 101: cell coverage
- 102: cell coverage
- 103: Integrated Access and Backhaul (IAB) donor (an example of a base station apparatus)
- 104: IAB donor
- 105: IAB node (an example of a communication apparatus)
- 106: IAB node (an example of a communication apparatus)
- 107: IAB node (an example of a communication apparatus)
- 108: mobile IAB node (an example of a communication apparatus)
- 109 to: 114 user equipment (UE)
- 201: control unit (an example of a processing unit and a request unit)
- 202: storage unit
- 203: wireless communication unit (an example of an acquisition unit)
- 204: antenna control unit
- 301: software functional block
- 302: signal transmission unit
- 303: signal reception unit
- 304: data storage unit
- 305: connection control unit
- 308: signal generation unit
- 401: software functional block
- 402: signal transmission unit
- 403: signal reception unit
- 404: data storage unit
- 405: connection control unit
- 406: network configuration information management unit

## Claims

1. A base station apparatus relating to provision of a communication service, the base station apparatus comprising:
an acquisition unit configured to acquire a connection request from an external apparatus to one Integrated Access and Backhaul (IAB) node; and
a processing unit configured to perform, at least in a case where the one IAB node is a mobile IAB node and the external apparatus is another IAB node, processing for rejecting the connection request.

2. The base station apparatus according to Claim 1, wherein, in a case where the external apparatus is user equipment (UE), the processing unit accepts the connection request.

3. The base station apparatus according to Claim 1 or 2, wherein the connection request includes type information indicating whether the external apparatus is an IAB node.

4. The base station apparatus according to any one of Claims 1 to 3, wherein, in a case where specific setting has been set to the base station apparatus and the external apparatus is a mobile IAB node, the processing unit rejects the connection request, whereas even in a case where the specific setting has been set to the base station apparatus but the external apparatus is user equipment (UE) or a fixed IAB node, the processing unit accepts the connection request.

5. The base station apparatus according to Claim 4, wherein the connection request includes identification information indicating whether the external apparatus is a mobile IAB node.

6. The base station apparatus according to any one of Claims 1 to 5, wherein, in a case where the external apparatus is another IAB node, and in a case where a number of hops to the another IAB node exceeds a threshold when the connection request is accepted, the processing unit rejects the connection request.

7. A communication apparatus mounted on a mobile object or in a form of a mobile object, and capable of forming an IAB network, the communication apparatus comprising:
a request unit configured to issue a connection request to one IAB node; and
a processing unit configured to provide, in a case where the connection request is accepted, a communication service to user equipment (UE) under control via the one IAB node,
wherein the request unit adds identification information indicating a mobile IAB node to the connection request.

8. A method for controlling communication, the method comprising:
acquiring a connection request from an external apparatus to one Integrated Access and Backhaul (IAB) node; and
performing, at least in a case where the one IAB node is a mobile IAB node and the external apparatus is another IAB node, processing for rejecting the connection request.

9. A program for causing a computer to execute:
acquiring a connection request from an external apparatus to one Integrated Access and Backhaul (IAB) node; and
performing, at least in a case where the one IAB node is a mobile IAB node and the external apparatus is another IAB node, processing for rejecting the connection request.

10. A method for controlling a communication apparatus, the method comprising:
transmitting, to one Integrated Access and Backhaul (IAB) node, a connection request including identification information indicating a mobile IAB node; and
providing, in a case where the connection request has been accepted, wireless connection to user equipment (UE) under control via the one IAB node.

11. A program for causing a computer of a communication apparatus to execute:
transmitting, to one Integrated Access and Backhaul (IAB) node, a connection request including identification information indicating a mobile IAB node; and
providing, in a case where the connection request has been accepted, wireless connection to user equipment (UE) under control via the one IAB node.
